# EUROPÄISCHE PATENTSCHRIFT

(11) **EP 4 140 958 B1**
(45) Veröffentlichungstag und Bekanntmachung des Hinweises auf die Patenterteilung: **30.09.2026**
(21) Anmeldenummer: 22187484.5
(22) Anmeldetag: 28.07.2022
(51) Int. Cl.: C02F 1/40, B01D 17/02, C02F 101/32, C02F 103/00, C02F 1/28, C02F 1/00

(54) **ABSCHEIDERVORRICHTUNG ZUR BEHANDLUNG EINES ÖL-WASSER-GEMISCHS**
SEPARATOR DEVICE FOR TREATING AN OIL-WATER MIXTURE
DISPOSITIF SÉPARATEUR DESTINÉ AU TRAITEMENT D'UN MÉLANGE HUILE-EAU

(30) Priorität: 26.08.2021 DE 102021122131
(43) Veröffentlichungstag der Anmeldung: 01.03.2023
(73) Patentinhaber: Proch, Alexander, 74862 Binau (DE)
(72) Erfinder: Proch, Alexander, 74862 Binau (DE)
(74) Vertreter: advotec.

(56) Entgegenhaltungen:
- GB-A- 2 190 854
- US-A1- 2010 065 480
- US-B2- 7 297 267

## Beschreibung

Die Erfindung betrifft eine Abscheidervorrichtung zur Behandlung eines Öl-Wasser-Gemischs nach dem Oberbegriff des Anspruchs 1.

Gattungsgemäße Abscheidervorrichtungen werden beispielsweise, jedoch keineswegs ausschließlich, verwendet, um das Bilgenwasser von Schiffen zu reinigen. Beim Betrieb von Schiffen und Tankern ist es unvermeidlich, dass sich in der Bilge durch die Öffnung des Rumpfs eintretendes Wasser und zum Betrieb des Schiffs notwendige Betriebsstoffe, beispielweise Schmieröl oder Treibstoff, miteinander vermischen. Derartige Gemische aus Wasser, insbesondere Seewasser, und Kohlenwasserstoffen, insbesondere Schmieröl und Treibstoff, sollen nachfolgend ganz allgemein als Öl-Wasser-Gemisch bezeichnet werden. Diese Öl-Wasser-Gemische stellen eine Gesundheitsgefahr für vielerlei Lebewesen dar und dürfen deshalb nicht unkontrolliert in die Umwelt abgelassen werden. Insbesondere ist das Abpumpen eines solchen Bilgenwassers, das aus einem Öl-Wasser-Gemisch gebildet ist, unzulässig.

Zur Behandlung eines solchen Bilgenwassers hat es sich deshalb eingebürgert, dass das Öl-Wasser-Gemisch nach dem Einlaufen in einen Hafen vom Schiff abgepumpt und anschließend in einer entsprechenden Entsorgungsanlage im Hafen entsorgt wird. Diese Entsorgung des Bilgenwassers ist teuer und zeitaufwändig. Auch ansonsten ist die Entsorgung derartiger Öl-Wasser-Gemische kostenaufwendig, da bereits ein sehr geringer Gehalt an Öl große Mengen von Wasser in einen umweltschädlichen Giftstoff verwandelt.

Aus der GB 2 190 854 A ist eine Vorrichtung zum Trennen von Öl aus Wasser bekannt, die das Öl in mehreren Trennstufen trennt, wobei das Öl-Wasser-Gemisch unter dem Einfluss von Schwerkraft weitergetragen unter anderem durch ein Faserbett und durch eine ölabweisende Membran geleitet wird.

Aus der US 2010/0065480 A1 ist eine Vorrichtung mit einem dreistufigen Filtersystem bekannt, wobei die Stufen zylinderförmige Filterelemente aufweisen, die Schichten aus nicht gewobenem Textil und Aktivkohle aufweisen.

Aus der US 7,297,267 B2 ist ein Filter zum Einsatz in einer Leitung bekannt, der zylinderförmig aufgebaut ist und mehrere Lagen umfasst. Eine Lage ist dabei ein nicht verwobener Faserkörper, der zwischen zwei Begrenzungselementen gehalten wird.

Ausgehend von diesem Stand der Technik ist es deshalb Aufgabe der vorliegenden Erfindung, eine Abscheidervorrichtung zur Behandlung eines Öl-Wasser-Gemischs vorzuschlagen, die eine kostengünstige und zeitsparende Nachbehandlung des Öl-Wasser-Gemischs erlaubt. Insbesondere soll diese Abscheidervorrichtung zur Nachbehandlung von Bilgenwasser in Schiffen geeignet sein.

Diese Aufgabe wird durch eine Abscheidervorrichtung nach der Lehre des Anspruchs 1 gelöst.

Vorteilhafte Ausführungsformen der Erfindung sind Gegenstand der Unteransprüche.

Die erfindungsgemäße Abscheidervorrichtung wird durch ein Filterelement charakterisiert, das in der Art eines dreidimensionalen Volumenvlieselements aus einem oleophilen Fasermaterial ausgebildet ist. Dieses Volumenvlies kann aus einem Vliesstoff gebildet werden, der aus Fasern mit begrenzter Länge, Endlosfasern (Filamenten) oder geschnittenen Garnen besteht. Durch die Anordnung der Fasern, Endlosfasern oder Garne, insbesondere in einer Wirrlage, wird ein dreidimensionales Volumenvlies gebildet, wobei zwischen den einzelnen Fasern, Endlosfasern oder Garnen eine Vielzahl von Zwischenräumen gebildet wird. Die Funktion der erfindungsgemäßen Abscheidervorrichtung beruht auf der Grunderkenntnis, dass durch das Durchleiten des Öl-Wasser-Gemischs durch das dreidimensionale Volumenvlieselement das im Öl-Wasser-Gemisch enthaltene Öl in den vom Volumenvlieselement gebildeten Zwischenräumen zurückgehalten werden kann. Dies bedeutet mit anderen Worten, dass das Öl-Wasser-Gemisch durch das dreidimensionale Volumenvlieselement hindurchfließt und beim Durchfluss durch die Zwischenräume des Volumenvlieselements in zwei Fraktionen aufgeteilt wird. Bei der ersten Fraktion handelt es sich um das im Öl-Wasser-Gemisch enthaltene Wasser, das das Volumenvlieselement im Wesentlichen ohne weitere Veränderung durchfließt, wohingegen das im Öl-Wasser-Gemisch enthaltene Öl in den vom Volumenvlieselement gebildeten Zwischenräumen zurückgehalten und damit vom Wasser abgetrennt wird. Im Ergebnis kann also durch die Verwendung des dreidimensionalen Volumenvlieselements ein Abtrennen des im Öl-Wasser-Gemisch enthaltenen Öls erreicht werden. Sobald die Zwischenräume im Volumenvlieselement weitgehend mit Öl gefüllt sind, ist die Reinigungskraft des Volumenvlieselements erschöpft, und dieses muss durch ein neues Volumenvlieselement ersetzt werden. Das mit Öl gefüllte Volumenvlieselement kann dann einer geeigneten Entsorgung, beispielsweise durch thermische Behandlung, zugeführt werden. Da die Abtrennung des Öl-Wasser-Gemischs im Durchfluss des Volumenvlieselements erfolgt, kann eine rasche und kostengünstige Reinigung großer Mengen von Öl-Wasser-Gemisch realisiert werden.

Da es besonders kostengünstig und einfach ist,, strömt das Öl-Wasser-Gemisch unter Schwerkrafteinfluss, aber zugleich drucklos, durch das Volumenvlieselement hindurch. Dies bedeutet mit anderen Worten, dass das Öl-Wasser-Gemisch einfach von oben auf das Volumenvlieselement aufgebracht wird und dann unter Schwerkrafteinfluss durch das Volumenvlieselement hindurchfließt. Während des schwerkraftgetriebenen Durchflusses wird dann das Öl aus dem Öl-Wasser-Gemisch in den Zwischenräumen des Volumenvlieselements abgetrennt.

Um die Reinigungskapazität in der Abscheidervorrichtung zu erhöhen, ist es erfindungsgemäß vorgesehen, dass mehrere Schichten aus jeweils einem Volumenvlieselement übereinander in der Abscheidervorrichtung angeordnet sind und dadurch ein Volumenvliespaket bilden. Die einzelnen Schichten des Volumenvliespakets werden dann zur Reinigung des Öl-Wasser-Gemischs nacheinander vom Öl-Wasser-Gemisch durchströmt. Durch entsprechende Erhöhung der Anzahl von Schichten aus Volumenvlieselementen im Volumenvliespaket kann die Reinigungskapazität der Abscheidervorrichtung frei nach oben bzw. unten skaliert werden.

Um ein seitliches Vorbeifließen des Öl-Wasser-Gemischs an den Rändern der Volumenvlieselemente im Volumenvliespaket zu vermeiden, ist es erfindungsgemäß vorgesehen, dass das Volumenvliespaket mit zumindest einem Spannelement, insbesondere einem Spannrahmen, in der Abscheidervorrichtung fixiert ist.

Weiterhin erfindungsgemäß ist es, dass die Ränder des Volumenvlieselements in einem Randabdichtungsrahmen fixiert sind, um ein seitliches Abfließen des vom Öl zu reinigenden Öl-Wasser-Gemischs zu verhindern. Auf diese Weise wird gewährleistet, dass das gesamte Öl-Wasser-Gemisch durch das Volumenvlieselement hindurchfließen und auf diese Weise vom Öl gereinigt werden kann.

Um die Durchflusseigenschaften der einzelnen Volumenvlieselemente geeignet anzupassen, kann das Volumenvlieselement ein Lochmuster aufweisen. Bevorzugt sollte das Volumenvlieselement ein unregelmäßiges Lochmuster aufweisen, so dass bei Anordnung mehrerer Volumenvlieselemente übereinander in einem Volumenvliespaket die einzelnen Lochungen nicht kongruent übereinander zu liegen kommen.

Weiterhin ist es besonders vorteilhaft, wenn oberhalb des Volumenvlieselements, insbesondere oberhalb des Volumenvliespakets, ein Überlaufrahmen vorgesehen ist, der ein Überlaufen des Öl-Wasser-Gemischs verhindert.

Um das Volumenvlieselement in der Abscheidervorrichtung zu fixieren und zugleich ein Ablaufen des vom Öl gereinigten Wassers zu ermöglichen, ist es besonders vorteilhaft, wenn das Volumenvlieselement, insbesondere das Volumenvliespaket, von oben auf einer gelochten Trägerplatte aufliegt. Sobald das vom Öl gereinigte Wasser aus dem untersten Volumenvlieselement austritt, gelangt es auf die Oberseite der Trägerplatte und fließt durch die Lochung der Trägerplatte nach unten ab.

Abhängig von der Art des zu reinigenden Öl-Wasser-Gemischs, insbesondere abhängig von der Art des Bilgenwassers, besteht die Gefahr, dass das Volumenvlieselement durch im Öl-Wasser-Gemisch enthaltene Verunreinigungen, insbesondere Schlamm oder sonstige Feststoffpartikel, frühzeitig zugesetzt und damit unbrauchbar gemacht wird. Um dies zu verhindern, ist es besonders vorteilhaft, wenn der Abscheidervorrichtung mit dem Volumenvlieselement eine Vorfiltereinrichtung vorgeschaltet ist, in der das Öl-Wasser-Gemisch vorgefiltert wird, um insbesondere Schlamm und sonstige Feststoffpartikel abzutrennen.

Abhängig vom Gehalt an Schlamm und Feststoffpartikeln im Öl-Wasser-Gemisch kann es zum entsprechenden Schutz des Volumenvlieselements vorteilhaft sein, wenn die Vorfiltereinrichtung mehrere Filterstufen umfasst, wobei in den jeweils vorgeschalteten Filterstufen entsprechend gröbere Partikel abgetrennt werden.

Welche Art von Filter in der Vorfiltereinrichtung eingesetzt wird, ist grundsätzlich beliebig. Besonders einfach und kostengünstig für diese Aufgabe sind sogenannte Beutelfilter, da mit diesen Beutelfiltern die im Öl-Wasser-Gemisch enthaltenen Feststoffpartikel einfach und kostengünstig abgefiltert werden können.

Mit der erfindungsgemäßen Abscheidervorrichtung kann das Öl-Wasser-Gemisch weitgehend von Öl befreit werden, wobei grundsätzlich ein bestimmter Restgehalt an Öl und anderen Verschmutzungen, abhängig von der jeweils nachfolgenden weiteren Verwendung, tolerierbar ist. Soweit der Reinigungsgrad, der mit der erfindungsgemäßen Abscheidervorrichtung erreicht werden kann, für den jeweils nachfolgenden Verwendungszweck des gereinigten Wassers nicht ausreicht, kann der Abscheidervorrichtung eine Nachfiltereinrichtung nachgeschaltet werden, um das mit der Abscheidervorrichtung vom Öl gereinigte Wasser noch nachzufiltern.

Abhängig vom jeweils erforderlichen Reinheitsgrad kann die Nachfiltereinrichtung mehrere Filterstufen umfassen.

Besonders vorteilhaft ist es, wenn die Nachfiltereinrichtung einen Feinfilter umfasst, mit dem im vom Öl gereinigten Wasser enthaltene Feinpartikel und/oder Bakterien gefiltert werden können.

Alternativ dazu bzw. additiv dazu kann die Nachfiltereinrichtung auch einen Aktivkohlefilter umfassen.

Soll die Qualität des mit der erfindungsgemäßen Abscheidervorrichtung gereinigten Wassers überwacht werden, ist es vorteilhaft, wenn an der Abscheidervorrichtung zumindest ein Reinigungssensor vorgesehen ist, mit dem der Gehalt an Kohlenwasserstoff (Öl) und/oder der Gehalt an Feinpartikeln im vom Öl gereinigten Wasser gemessen werden kann.

Auf diese Weise kann die Qualität des Reinigungsvorgangs der Abscheidervorrichtung überwacht und entsprechend nachgeführt werden.

Weiterhin ist es vorteilhaft, wenn an der Abscheidervorrichtung eine Datenspeichereinrichtung vorgesehen ist, mit der die Sensordaten protokolliert werden können. Auf diese Weise ist eine Dokumentation des Reinigungsvorgangs möglich, um eine nachfolgende Überprüfung des Reinigungsvorgangs zu ermöglichen.

Weiterhin kann an der Abscheidervorrichtung eine Datenkommunikationseinrichtung, beispielsweise ein WLAN-Modul, vorgesehen sein, mit der die Sensordaten an einen Datenempfänger übermittelt werden können. Auf diese Weise können die Daten zum Nachweis der Reinigung des Öl-Wasser-Gemischs an beliebige Datenempfänger, beispielsweise Behörden, übertragen werden.

Eine Ausführungsform der Erfindung ist in den Zeichnungen schematisiert dargestellt und wird nachfolgend beispielhaft erläutert.

Es zeigen:
- **Fig. 1**: eine erfindungsgemäße Abscheidervorrichtung in seitlicher Ansicht;
- **Fig. 2**: einen Behälter zur Aufnahme eines Volumenvliespakets in perspektivischer Ansicht von oben;
- **Fig. 3**: den Behälter gemäß Fig. 2 im perspektivischen Querschnitt.

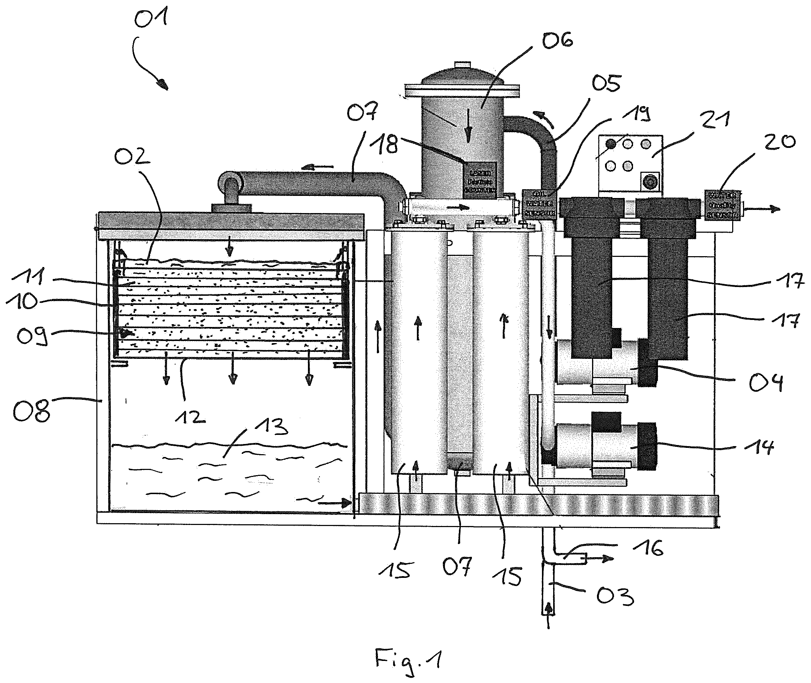

**Fig. 1** zeigt eine Abscheidervorrichtung 01 zur Behandlung eines Öl-Wasser-Gemischs 02 in seitlicher Ansicht. Über eine nur teilweise dargestellte Rohrleitung 03 wird das Öl-Wasser-Gemisch durch Antrieb einer Förderpumpe 04 aus der Bilge eines Schiffs herausgefördert und über eine Rohrleitung 05 in eine Vorfiltereinrichtung 06 eingefördert. In der Vorfiltereinrichtung 06 wird das Öl-Wasser-Gemisch aus der Bilge vorgereinigt, und die im Öl-Wasser-Gemisch 02 enthaltenen Feststoffpartikel werden abgetrennt. Anschließend gelangt das Öl-Wasser-Gemisch 02 über eine Rohrleitung 07 in ein geschlossenes Filtergehäuse 08. Im Filtergehäuse 08 wird ein Filterelement 09 mittels eines Fixierrahmens 10 gehalten. Das Filterelement 09 umfasst mehrere übereinander angeordnete Volumenvlieselemente 11, die von oben auf einer gelochten Trägerplatte 12 aufliegen. Wird nun das Öl-Wasser-Gemisch 02 durch Antrieb der Förderpumpe 04 in das Innere des Filtergehäuses 08 eingepumpt, so verteilt sich das Öl-Wasser-Gemisch auf dem obersten Volumenvlieselement 11 und fließt unter Schwerkrafteinfluss nach unten ab. Die Mehrzahl von Volumenvlieselementen 11 bildet dabei ein Volumenvliespaket, wobei das im Öl-Wasser-Gemisch 02 enthaltene Öl beim Durchfluss durch die Volumenvlieselemente 11 vom Öl gereinigt wird. Das im Öl-Wasser-Gemisch 02 enthaltene Öl wird in den vom Material der Volumenvlieselemente gebildeten Zwischenräumen zurückgehalten. Die Volumenvlieselemente sind deshalb aus oleophilen Fasermaterialien hergestellt. Das im Öl-Wasser-Gemisch enthaltene Wasser dagegen fließt weitgehend ungehindert nach unten ab und sammelt sich als gereinigtes Wasser 13 unterhalb der gelochten Trägerplatte 12 im Filtergehäuse 08. Durch eine Öffnung an der Unterseite des Gehäuses 08 wird das gereinigte Wasser 13 dann durch Antrieb einer zweiten Förderpumpe 14 abgesaugt und durch zwei Nachfiltereinrichtungen 15 durchgefördert. In den Nachfiltereinrichtungen 15, die als Ultra-Feinfilter ausgebildet sind, wird das gereinigte Wasser 13 nachgereinigt, so dass eventuell noch enthaltene Schadstoffe abgetrennt werden. Anschließend wird das gereinigte Wasser 13 über eine Rohrleitung 16 ausgefördert und kann problemlos in die das Schiff umgebende Umwelt abgegeben werden. Soweit mit der in Fig. 1 dargestellten Abscheidervorrichtung eine als Trinkwasser geeignete Wasserqualität erreicht werden soll, kann das gereinigte Wasser 13 nach Durchlauf durch die Nachfiltereinrichtungen 15 auch noch durch zwei Trinkwasserfilter 17, die beispielsweise in der Art von Aktivkohlefiltern ausgebildet sein können, hindurchgefördert werden. In diesem Fall kann dann an der Rohrleitung 18 Wasser in Trinkwasserqualität abgenommen werden.

Zur Dokumentation der Reinigungsqualität der in Fig. 1 dargestellten Anlage dienen ein Lasersensor 18, mit dem die im gereinigten Wasser 13 enthaltenen Feststoffpartikel nach Qualität und Menge gemessen werden können, ein Öl-Wasser-Sensor 19, mit dem die im gereinigten Wasser 13 enthaltenen Restmengen an Kohlenwasserstoffen (Öl) nachgewiesen werden können, und ein Trinkwassersensor 20. Die Daten der Sensoren 18, 19 und 20 werden in einem Speicher in der Steuerung 21 abgespeichert und können mittels einer nicht dargestellten Datenkommunikationseinrichtung an beliebige Datenempfänger weitergeleitet werden.

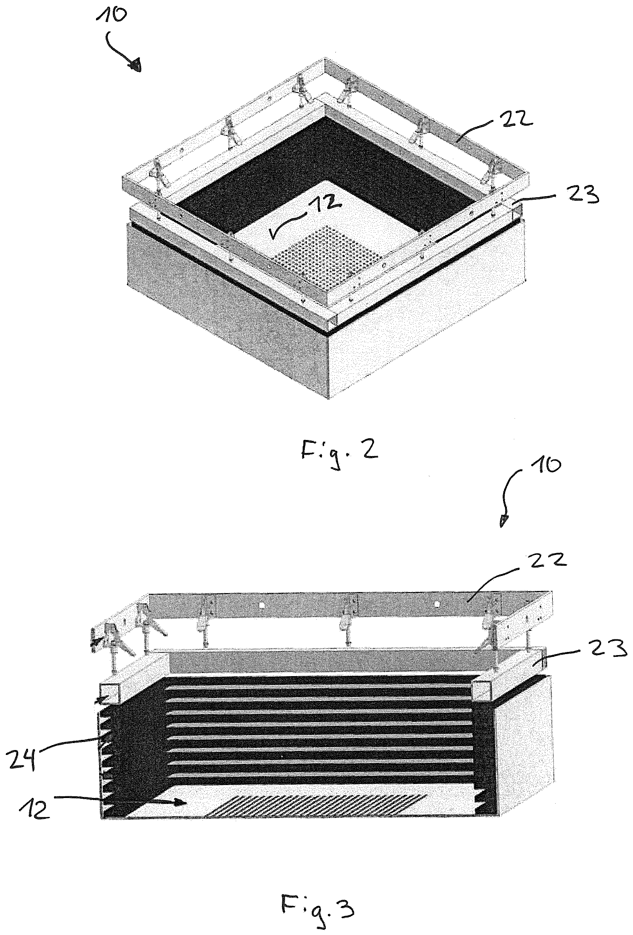

**Fig. 2** zeigt den Fixierrahmen 10 zur Aufnahme der das Volumenvliespaket bildenden Volumenvlieselemente 11 in perspektivischer Ansicht von oben. Man erkennt die gelochte Trägerplatte 12, auf der die Volumenvlieselemente 11 von oben aufliegen. Die Volumenvlieselemente 11 werden mittels eines Spannrahmens 22 im Fixierrahmen 10 gespannt, so dass das Öl-Wasser-Gemisch nicht seitlich an den Rändern der Volumenvlieselemente vorbeifließen kann. Mittels eines Überlaufrahmens 23 wird ein Überlauf des Öl-Wasser-Gemischs 02 verhindert.

**Fig. 3** zeigt den Fixierrahmen 10 in einem seitlichen perspektivischen Querschnitt. Für jedes Volumenfixierelement 11 ist an der Innenseite des Fixierrahmens 10 ein Randabdichtungsrahmen 24 vorgesehen. Der Rand der einzelnen Volumenvlieselemente 11 wird in den Randabdichtungsrahmen 24 aufgenommen und durch Spannen des Spannrahmens 22 von oben zusammengedrückt und fixiert.

## Patentansprüche

1. Abscheidervorrichtung (01) zur Behandlung eines Öl-Wasser-Gemischs (02), mit einem Zulauf, über den das Öl-Wasser-Gemisch (02) der Abscheidervorrichtung (01) zugefördert werden kann, und mit einem Ablauf, über den das vom Öl gereinigte Wasser (13) abgeführt werden kann, wobei die Abscheidervorrichtung (01) zumindest ein Filterelement (09) umfasst, mit dem das im Öl-Wasser-Gemisch (02) enthaltene Öl zumindest teilweise abgeschieden werden kann, **dadurch gekennzeichnet,**
**dass** das Filterelement (09) zumindest ein dreidimensionales Volumenvlieselement (11) umfasst, wobei das Volumenvlieselement (11) vom Öl-Wasser-Gemisch (02) unter Schwerkrafteinfluss drucklos durchströmt werden kann, und wobei das im Öl-Wasser-Gemisch (02) enthaltene Öl in den vom Volumenvlieselement (11) gebildeten Zwischenräumen zurückgehalten wird, wobei das Volumenvlieselement (11) aus einem oleophilen Fasermaterial hergestellt ist,
**dass** mehrere Schichten aus jeweils einem Volumenvlieselement (11) übereinander in der Abscheidervorrichtung (01) als Volumenvliespaket angeordnet sind, wobei die einzelnen Schichten des Volumenvliespakets nacheinander vom Öl-Wasser-Gemisch (02) durchströmt werden, und
**dass** die Volumenvlieselemente (11) des Volumenvliespakets mit zumindest einem Spannelement in der Abscheidervorrichtung (01) fixiert sind, wobei der Rand des Volumenvlieselements (11) in einem Randabdichtungsrahmen (24) fixiert ist.

2. Abscheidervorrichtung nach Anspruch 1,
**dadurch gekennzeichnet,**
**dass** zumindest ein Volumenvlieselement (11) des Volumenvliespakets ein Lochmuster aufweist.

3. Abscheidervorrichtung nach Anspruch 1 oder 2,
**dadurch gekennzeichnet,**
**dass** das Spannelement ein Spannrahmen (22) ist.

4. Abscheidervorrichtung nach einem der Ansprüche 1 bis 3,
**dadurch gekennzeichnet,**
**dass** oberhalb des Volumenvlieselements (11), insbesondere oberhalb des Volumenvliespakets, ein Überlaufrahmen (23) vorgesehen ist, der ein seitliches Überlaufen des Öl-Wasser-Gemischs (02) verhindert.

5. Abscheidervorrichtung nach einem der Ansprüche 1 bis 4,
**dadurch gekennzeichnet,**
**dass** das Volumenvlieselement (11), insbesondere das Volumenvliespaket, von oben auf einer gelochten Trägerplatte (12) aufliegt und/oder dass der Abscheidervorrichtung (01) eine Vorfiltereinrichtung (06) vorgeschaltet ist, in der das Öl-Wasser-Gemisch vorgefiltert wird.

6. Abscheidervorrichtung nach Anspruch 5,
**dadurch gekennzeichnet,**
**dass** die Vorfiltereinrichtung (06) mehrere Filterstufen umfasst.

7. Abscheidervorrichtung nach Anspruch 5 oder 6,
**dadurch gekennzeichnet,**
**dass** die Vorfiltereinrichtung (06) einen Beutelfilter umfasst, mit dem im Öl-Wasser-Gemisch (02) enthaltene Feststoffpartikel abgefiltert werden können.

8. Abscheidervorrichtung nach einem der Ansprüche 1 bis 7,
**dadurch gekennzeichnet,**
**dass** der Abscheidervorrichtung (01) eine Nachfiltereinrichtung (15, 20) nachgeschaltet ist, in der das vom Öl gereinigte Wasser nachgefiltert wird.

9. Abscheidervorrichtung nach Anspruch 8,
**dadurch gekennzeichnet,**
**dass** die Nachfiltereinrichtung (15, 20) mehrere Filterstufen umfasst.

10. Abscheidervorrichtung nach Anspruch 8 oder 9,
**dadurch gekennzeichnet,**
**dass** die Nachfiltereinrichtung (15) einen Feinfilter umfasst, mit dem im vom Öl gereinigten Wasser enthaltene Feinpartikel und/oder Bakterien abgefiltert werden können.

11. Abscheidervorrichtung nach einem der Ansprüche 8 bis 10,
**dadurch gekennzeichnet,**
**dass** die Nachfiltereinrichtung (20) einen Aktivkohlefilter umfasst.

12. Abscheidervorrichtung nach einem der Ansprüche 1 bis 11,
**dadurch gekennzeichnet,**
**dass** an der Abscheidervorrichtung (01) zumindest ein Reinigungssensor (18, 19, 20) vorgesehen ist, mit dem die Wasserqualität des vom Öl gereinigten Wassers (13), insbesondere der Gehalt an Kohlenwasserstoffen und/oder der Gehalt an Feinpartikeln im vom Öl gereinigten Wasser (13), gemessen werden kann.

13. Abscheidervorrichtung nach Anspruch 12,
**dadurch gekennzeichnet,**
**dass** an der Abscheidervorrichtung (01) eine Datenspeichereinrichtung vorgesehen ist, mit der die Sensordaten protokolliert werden können.

14. Abscheidervorrichtung nach Anspruch 12 oder 13,
**dadurch gekennzeichnet,**
**dass** an der Abscheidervorrichtung (01) eine Datenkommunikationseinrichtung vorgesehen ist, mit der die Sensordaten an einen Datenempfänger übermittelt werden können.

## Claims

1. A separation device (01) for treating an oil-water mixture (02), the separation device (01) having an inlet, via which the oil-water mixture (02) may be conveyed to the separation device (01), and an outlet, via which the water (13) cleansed of oil can be discharged, the separation device (01) comprising at least one filter element (09), by means of which the oil contained in the oil-water mixture (02) may be separated at least partially,
**characterized in that**
the filter element (09) comprises at least a three-dimensional coalescence fleece component (11), the oil-water mixture (02) being able to flow through the coalescence fleece component (11) under the influence of gravity but not under pressure, and the oil contained in the oil-water mixture (02) being retained in the gaps formed by the coalescence fleece component (11), the coalescence fleece component (11) being produced of an oleophilic fiber material,
**in that** several layers of one coalescence fleece component (11) each are arranged one above the other in the separation device (01) as a coalescence fleece component pack, the oil-water mixture (02) flowing through the individual layers of the coalescence fleece component pack one after the other,
**in that** the coalescence fleece components (11) of the coalescence fleece component pack are fixated in the separation device (01) by at least one fixation element, the edge of the coalescence fleece component (11) being fixated in an edge sealing frame (24).

2. The separation device according to claim 1,
**characterized in that**
at least one coalescence fleece component (11) of the coalescence fleece component pack has a hole pattern.

3. The separation device according to claim 1 or 2,
**characterized in that**
the fixation element is a fixating frame (22).

4. The separation device according to any one of the claims 1 to 3,
**characterized in that**
an overflow frame (23), which prevents a lateral overflow of the oil-water mixture (02), is provided above the coalescence fleece component (11), in particular above the coalescence fleece component pack.

5. The separation device according to any one of the claims 1 to 4,
**characterized in that**
the coalescence fleece component (11), in particular the coalescence fleece component pack, rests on a hole-punched support plate (12) from above, and/or **in that** a prefiltering unit (06), which prefilters the oil-water mixture, is switched upstream of the separation device (01).

6. The separation device according to claim 5,
**characterized in that**
the prefiltering unit (06) has several filtering stages.

7. The separation device according to claim 5 or 6,
**characterized in that**
the prefiltering unit (06) comprises a bag filter which can filter out solid particles contained in the oil-water mixture.

8. The separation device according to any one of the claims 1 to 7,
**characterized in that**
a post-filtering unit (15, 20) is switched downstream of the separation device (01), which post-filters the water cleansed of oil.

9. The separation device according to claim 8,
**characterized in that**
the post-filtering unit (15, 20) has several filtering stages.

10. The separation device according to claim 8 or 9,
**characterized in that**
the post-filtering unit (15) has a fine filter, which can filter out fine particles and/or bacteria contained in the water cleansed of oil.

11. The separation device according to any one of the claims 8 to 10,
**characterized in that**
the post-filtering unit (20) comprises an activated carbon filter.

12. The separation device according to any one of the claims 1 to 11,
**characterized in that**
at least one cleaning sensor (18, 19, 20) is provided at the separation device (01), the cleaning sensor (18, 19, 20) being able to measure the water quality of the water (13) cleansed of oil, in particular the hydrocarbon content and/or the fine particle content in the water (13) cleansed of oil.

13. The separation device according to claim 12,
**characterized in that**
a data storage unit is provided at the separation device (01), which may log the sensor data.

14. The separation device according to claim 12 or 13,
**characterized in that**
a data communication unit is provided at the separation device (01), which may transmit the sensor data to a data receiver.

## Revendications

1. Dispositif séparateur (01) destiné au traitement d'un mélange huile-eau (02), le dispositif séparateur (01) ayant une amenée, par laquelle le mélange huile-eau (02) peut être acheminé vers le dispositif séparateur (01), et une évacuation, par laquelle l'eau (13) épurée de l'huile peut être évacuée, le dispositif séparateur (01) comprenant au moins un élément filtrant (09), au moyen duquel l'huile contenue dans le mélange huile-eau (02) peut être séparée au moins partiellement,
**caractérisé en ce que**
l'élément de filtre (09) comprend au moins un composant filtrant coalescent (11) tridimensionnel, le mélange huile-eau (02) pouvant s'écouler à travers le composant filtrant coalescent (11) sous l'effet de la gravité mais non sous pression, et l'huile contenue dans le mélange huile-eau (02) étant retenue dans les interstices formés par le composant filtrant coalescent (11), le composant filtrant coalescent (11) étant constitué d'un matériau fibreux oléophile,
**en ce que** plusieurs couches constituées d'un même composant filtrant coalescent (11) sont disposées les unes au-dessus des autres dans le dispositif séparateur (01) pour former un ensemble de composants filtrants coalescents, le mélange huile-eau (02) s'écoulant successivement à travers les différentes couches de l'ensemble de composants filtrants coalescents et
**en ce que** les composants filtrants coalescents (11) de l'ensemble de composants filtrants coalescents sont fixés dans le dispositif séparateur (01) par au moins un élément de fixation, le bord du composant filtrant coalescent (11) étant fixé dans un cadre (24) d'étanchement des bords.

2. Dispositif séparateur selon la revendication 1,
**caractérisé en ce**
**qu'**au moins un composant filtrant coalescent (11) de l'ensemble de composants filtrants coalescents présente un motif de trous.

3. Dispositif séparateur selon la revendication 1 ou la revendication 2,
**caractérisé en ce que**
l'élément de fixation est un cadre de fixation (22).

4. Dispositif séparateur selon l'une quelconque des revendications 1 à 3,
**caractérisé en ce**
**qu'**un cadre de débordement (23), qui empêche un débordement latéral du mélange huile-eau (02), est prévu au-dessus du composant filtrant coalescent (11), notamment au-dessus de l'ensemble de composants filtrants coalescents.

5. Dispositif séparateur selon l'une quelconque des revendications 1 à 4,
**caractérisé en ce que**
le composant filtrant coalescent (11), notamment l'ensemble de composants filtrants coalescents, repose par le haut sur une plaque de support (12) perforée et/ou **en ce qu'**un appareil de préfiltration (06), qui préfiltre le mélange huile-eau, est monté en amont du dispositif séparateur (01).

6. Dispositif séparateur selon la revendication 5,
**caractérisé en ce que**
l'appareil de préfiltration (06) comprend plusieurs étapes de filtrage.

7. Dispositif séparateur selon la revendication 5 ou la revendication 6,
**caractérisé en ce que**
l'appareil de préfiltration (06) comprend un filtre à sac capable de filtrer les particules solides contenues dans le mélange huile-eau.

8. Dispositif séparateur selon l'une quelconque des revendications 1 à 7,
**caractérisé en ce**
**qu'**un appareil de post-filtration (15, 20) est monté en aval du dispositif séparateur (01), ledit appareil de post-filtration assurant la post-filtration de l'eau épurée de l'huile.

9. Dispositif séparateur selon la revendication 8,
**caractérisé en ce que**
l'appareil de post-filtration (15, 20) comprend plusieurs étapes de filtrage.

10. Dispositif séparateur selon la revendication 8 ou la revendication 9,
**caractérisé en ce que**
l'appareil de post-filtration (15) comprend un filtre fin capable de filtrer les particules fines et/ou les bactéries contenues dans l'eau épurée de l'huile.

11. Dispositif séparateur selon l'une quelconque des revendications 8 à 10,
**caractérisé en ce que**
l'appareil de post-filtration (20) comprend un filtre à charbon actif.

12. Dispositif séparateur selon l'une quelconque des revendications 1 à 11,
**caractérisé en ce**
**qu'**au moins un capteur de nettoyage (18, 19, 20) est prévu sur le dispositif séparateur (01), le capteur de nettoyage (18, 19, 20) étant capable de mesurer la qualité de l'eau (13) épurée de l'huile, notamment la teneur en hydrocarbures et/ou la teneur en particules fines dans l'eau (13) épurée de l'huile.

13. Dispositif séparateur selon la revendication 12,
**caractérisé en ce**
**qu'**une mémoire de données est prévue sur le dispositif séparateur (01), ladite mémoire de données pouvant consigner les données du capteur par écrit.

14. Dispositif séparateur selon la revendication 12 ou la revendication 13,
**caractérisé en ce**
**qu'**un appareil de transmission de données est prévu sur le dispositif séparateur (01), ledit appareil de transmission de données pouvant transmettre les données du capteur à un récepteur de données.
